# EUROPEAN PATENT APPLICATION

(11) **EP 4 223 191 A1**
(43) Date of publication of application: **09.08.2023**
(21) Application number: 20955642.2
(22) Date of filing: 30.09.2020
(51) Int. Cl.: A47J 43/07, A47J 43/046

(54) **CUTTER ASSEMBLY AND FOOD PROCESSOR HAVING SAME**

(71) Applicant: Zhejiang Shaoxing Supor Domestic Electrical Appliance Co., Ltd., Shaoxing, Zhejiang 312017 (CN)
(72) Inventor: YANG, Baobin, Shaoxing, Zhejiang 312017 (CN)
(74) Representative: LLR
(86) International application number: PCT/CN2020/119209
(87) International publication number: WO 2022/067617

(57) **Abstract**

A cutter assembly and a food processor having the same. The cutter assembly comprises an output shaft (31), a first cutter assembly (4) and a second cutter assembly. Either of the first cutter assembly (4) and the second cutter assembly are detachably connected to the output shaft (31). By means of the detachable connection between the output shaft (31) and the cutters, different cutters can be conveniently replaced.

## Description

### Technical Field

The present invention relates to the technical field of small home kitchen appliances, and in particular, to a cutter assembly and a food processor comprising such a cutter assembly.

### Background

Currently, most food processors on the market can perform only one function or similar functions of one type. For example, a juicer can perform juicing and soy milk making, but cannot perform functions of mixing dough or kneading dough, whereas a dough maker can mix dough and knead dough, but cannot perform functions of juicing or making soy milk. Though there are multi-function food processors capable of performing multiple functions on the market, the results of performing some of the functions are not satisfactory. This is because the mode of output connection in the prior art is single and hardly adapts at the same time to different functions of food processing.

In view of this, the prior art needs to be improved.

### Summary of the Invention

The present invention provides a cutter assembly and a food processor comprising such a cutter assembly, in which the replacement of the cutter by different ones is facilitated.

The present invention achieves the above-described objective by means of the following technical solutions.

A cutter assembly, comprising an output shaft, a first cutter assembly and a second cutter assembly that are alternatively and removably connected to the output shaft. By means of the removable connection between the output shaft and the cutter, replacement of the cutter by different ones is facilitated.

Further, the first cutter assembly comprises a first sleeve sleeved on the output shaft, and a first cutter connected to the first sleeve. A different first sleeve can adapt to a different cutter. Therefore, by providing further first sleeves, multiple modes of connection are added, which adapt to the mounting of different cutters.

Further, the output shaft is provided with a first snap-on member, and the first sleeve is provided with a second snap-on member, the first sleeve and the output shaft being connected to each other through the snap fit between the first snap-on member and the second snap-on member. By means of snap-fit mounting, the mounting is simple.

Further, the first snap-on member is a boss , and the second snap-on member is a groove; or, the first snap-on member is a groove, and the second snap-on member is a boss. By means of mounting by snap-fit between a boss and a groove, the mounting is simple and it is easy to dismount and clean.

Further, the output shaft comprises a body part, and the first sleeve is provided therein with a body part groove cooperating with the body part, the output shaft driving the first sleeve to rotate through the cooperation between the body part and the body part groove. By means of cooperation between the flat body part and the body part groove, relative rotation between the output shaft and the first sleeve is prevented, so as to ensure that the output shaft drives the first sleeve to rotate.

Further, the first sleeve is provided with a rib at its outer side, and the first cutter is provided with a rib slot that fits with the rib. By means of cooperation between the rib and the rib slot, on one hand, torque transmission from the first sleeve to the first cutter in the circumferential direction of the output shaft can be achieved, and on the other hand, the up and down movement of the first cutter on the first sleeve in the axial direction of the output shaft can be guided.

Further, the first cutter is connected to the first sleeve in such a way that it can move up and down on the first sleeve. In the case of food that needs to be crushed, such as juicing, the up and down movement of the first cutter can improve crushing results.

Further, the second cutter assembly comprises a second cutter sleeved on the output shaft. With the second cutter directly provided on the output shaft, the structure is simple.

The present invention further provides a food processor, comprising a host, a food processing cup placed on the host, and a cutter assembly according to any one of the above technical solutions, wherein the cutter assembly protrudes into the food processing cup, and an electric motor that drives the cutter assembly to rotate is provided in the host. Of course, the food processor provided by the present invention has the above-described beneficial effects as it comprises the above-described cutter assembly.

Further, the electric motor is connected to or disconnected from the output shaft through a clutch. By connecting to or disconnecting from the output shaft by means of the clutch, its structure is simple and the removal and mounting of the food processing cup and the cutter assembly is facilitated.

In a cutter assembly provided in an embodiment of the present invention, the change to different cutters is facilitated by means of removal connection between the output shaft and the cutters; further, by providing the first sleeve, multiple modes of connection are added, which further adapt to the mounting of different cutters. A food processor provided in an embodiment of the present invention has multiple different food processing functions and the food processing results of these functions can be improved.

### Description of the Drawings

Fig. 1 is an assembly view in perspective of a food processor according to an embodiment of the present invention.
Fig. 2 is an exploded view in perspective of the food processor shown in Fig. 1 with the host removed.
Fig. 3 is an exploded view in perspective of an output shaft assembly and a first sleeve in an embodiment of the present invention.
Fig. 4 is an assembly view in perspective of an output shaft assembly and a first sleeve in an embodiment of the present invention.
Fig. 5 is a longitudinal sectional view of the output shaft assembly and the first sleeve shown in Fig. 4.
Fig. 6 is a partial enlarged view of part A in Fig. 5.
Fig. 7 is a cross sectional view of the output shaft assembly and the first sleeve shown in Fig. 4.
Fig. 8 is an assembly view of the output shaft assembly and the first sleeve shown in Fig. 4 and a first cutter.
Fig. 9 is a partial enlarged view of part B in Fig. 8.
Fig. 10 is an assembly view of the output shaft assembly shown in Fig. 4 and a second cutter.

Description of references in the accompanying drawings: 1-host; 11-clutch; 2-food processing cup; 21-cup body; 22-cup lid; 3-output shaft assembly; 31-output shaft; 311-body part; 3111-flat face; 312-boss; 321-support; 322-oil seal; 323-position limiting washer; 324-bearing; 325-sealing ring; 326-elastic retaining ring; 4-first cutter assembly; 41-first sleeve; 411-rib; 412-groove; 42-first cutter; 421-rib slot; 43-second cutter.

### Detailed Description of the Embodiments

Exemplary embdiments will now be described in detail, which are illustrated in the accompanying drawings by way of example. When the following description refers to the accompanying drawings, the same numbers in different figures refer to the same or similar elements unless otherwise indicated. The modes of realization described in the following exemplary embodiments do not represent all the modes of realization consistent with the present invention. Instead, they are merely examples of devices and methods consistent with some aspects of the present invention as set forth in detail in the appended claims.

A cutter assembly according to an embodiment of the present invention and a food processor comprising such a cutter assembly will be described in detail below with reference to the accompanying drawings.

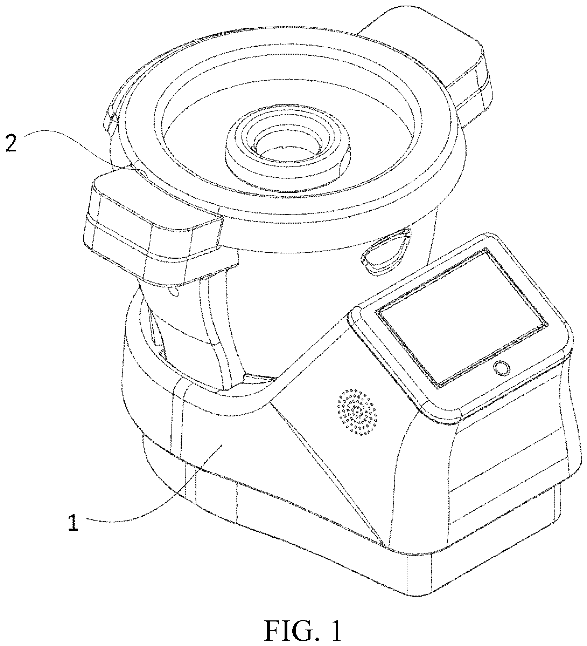

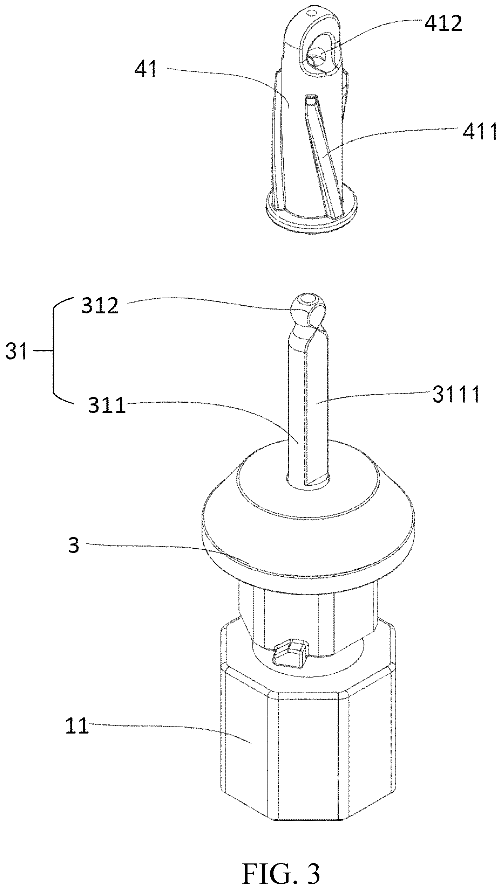

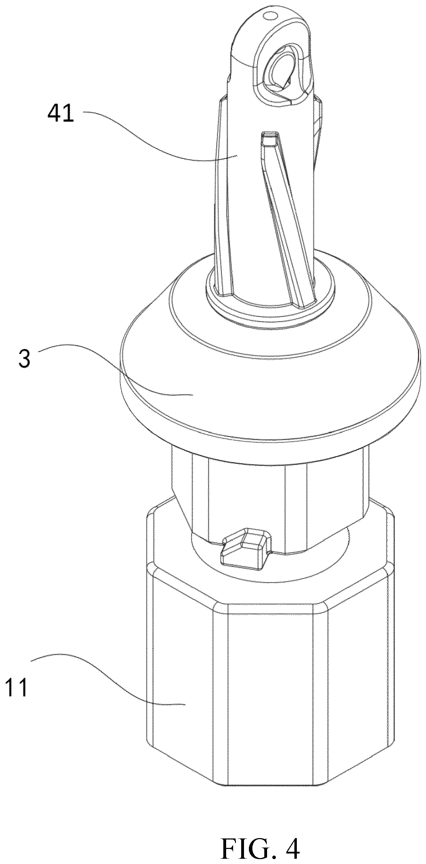

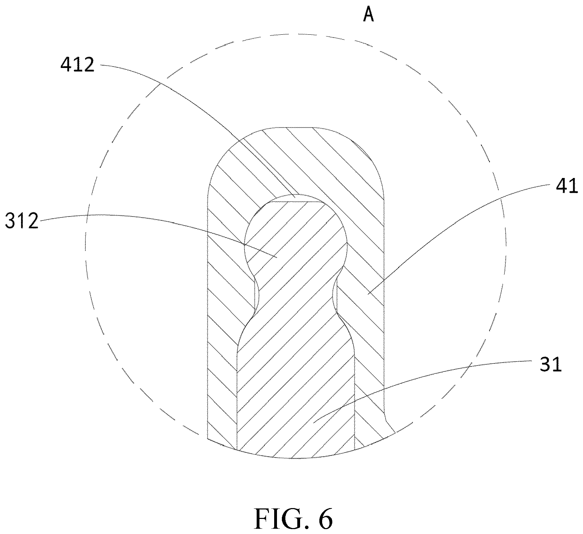

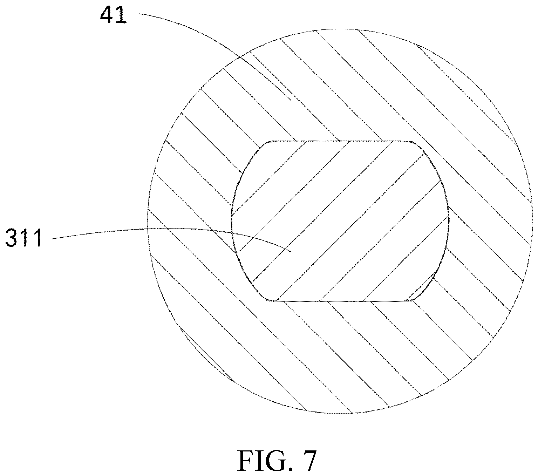

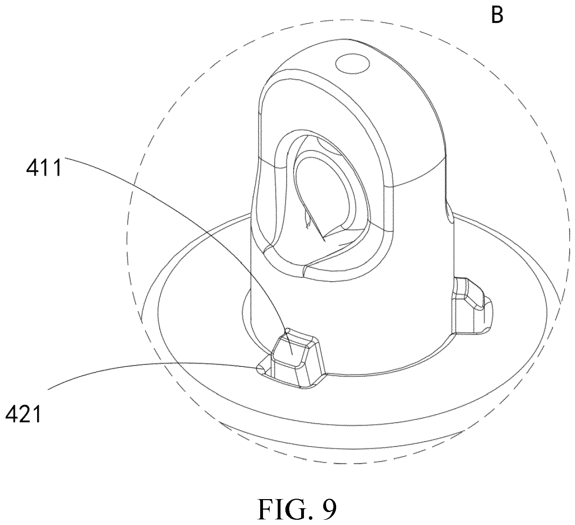

With reference to Figs. 1 to 10, a food processor according to an embodiment of the present invention comprises a host 1, a food processing cup 2 placed on the host 1, and a cutter assembly protruding into the food processing cup 2, an electric motor (not illustrated) that drives the cutter assembly to rotate being provided in the host 1. The food processor can specifically be a soy milk machine, a juicer, a high speed blender, a dough maker, a meat grinder, a stir-fry dish maker, etc.

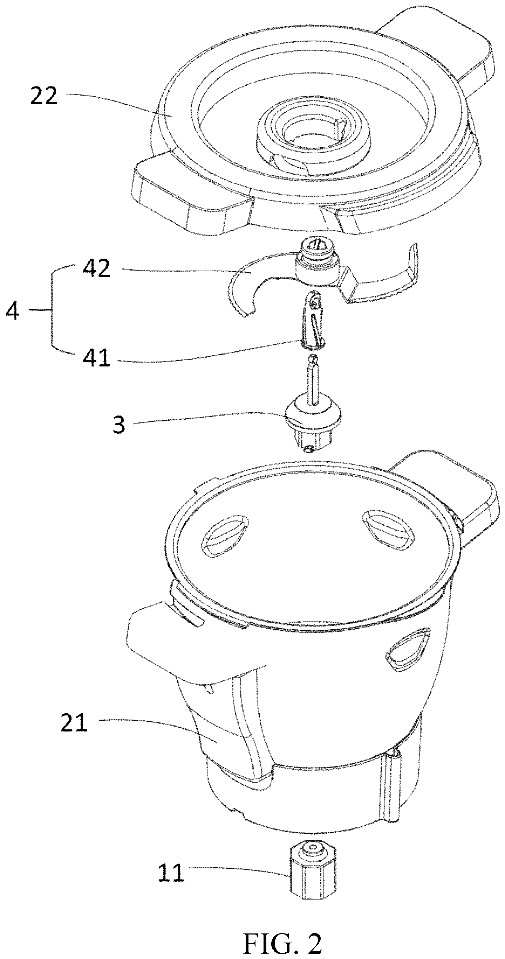

With reference to Fig. 2, the food processing cup 2 comprises a cup body 21 and a cup lid 22 covering the cup body 21. The food processing cup 2 can be made of metal, such as stainless steel, or of glass or of plastic, depending on the food that it is used to process. The cup body 21 of the food processing cup 2 is used for holding food, and the cutter assembly is inserted into the cup body 21 of the food processing cup 2 for processing the food inside it.

With reference to Figs. 2, 8, and 10, the cutter assembly comprises an output shaft assembly 3, a first cutter assembly 4, and a second cutter assembly (not referenced). The first cutter assembly 4 and the second cutter assembly are both removably connected to the output shaft assembly 3, and the output shaft assembly 3 is alternatively connected to the first cutter assembly 4 and the second cutter assembly.

With reference to Figs. 2 to 4, the output shaft assembly 3 comprises an output shaft 31. The first cutter assembly 4 comprises a first sleeve 41 sleeved on the output shaft 31 and a first cutter 42 connected to the first sleeve 41. The output shaft 31 comprises a body part 311 and a first snap-on member located at the upper end of the body part 311. The first snap-on member in the present embodiment is a boss 312. The body part 311 is of a flat structure formed by a cylindrical shaft with two sides cut into a flat face 3111. The boss 312 is a spherical structure with two sides cut into a plane. A retracked neck is provided between the boss 312 and the body part 311.

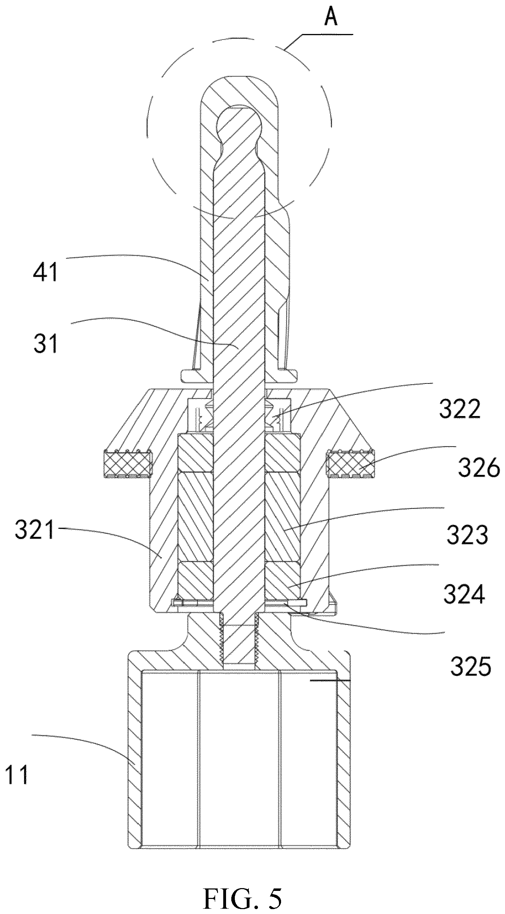

With reference in particular to Figs. 5 to 7, the output shaft assembly 3 further comprises a support 321 inside which, from top to bottom, are arranged sequentially an oil seal 322, a position limiting washer 323, a bearing 324, and a sealing ring 325. An elastic retaining ring 326 is further sleeved outside the support 321. The lower end of the output shaft 31 extends into the support 321, and its smooth rotation is ensured by lubrication of a lubricant, which improves its service life.

Still with reference to Figs. 5 to 7, the first sleeve 41 is of a hollow structure inside which a body part groove (not designated by a reference number) that cooperates with the body part 311 of the output shaft 31. By means of the cooperation of the body part 311 and the body groove, relative rotation between the output shaft 31 and the first sleeve 41 is prevented, so as to achieve torque transmission. In the present embodiment, the body part 311 is of a flat shape, and the body part groove is substantially of a square shape. In other embodiments, the body part 311 can also be in the shape of a triangular cylinder, a square cylinder, a D-shaped cylinder formed by cutting away part of a circular cylinder; the body part groove is configured to be of a shape that cooperates with it so long as there will not be relative rotation between the two. The upper end of the first sleeve 41 is provided with a second snap-on member. The second snap-on member in the present embodiment is a groove 412. When the first sleeve 41 is sleeved to the output shaft 31, the groove 412 and the boss 312 on the output shaft 31 engage in a snap-fit manner, so as to achieve fixation between the output shaft 31 and the first sleeve 41 and prevent the first sleeve 41 from disengaging upward from the output shaft 31. By means of the snap-fit between the boss 312 and the groove 412, its mounting is easy and dismounting and cleaning are facilitated. In the present embodiment, the boss 312 is arranged on the output shaft 31 whereas the groove 412 is arranged in the first sleeve 41; as a variant structure, it can be arranged that the output shaft 31 is provided with the groove whereas the first sleeve 41 is provided with a boss that cooperates with it.

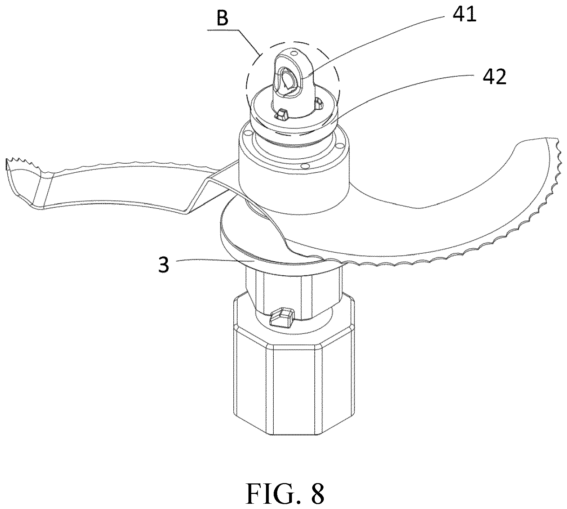

With reference to Figs. 8 to 9, the first sleeve 41 is provided at its outer side with a plurality of ribs 411 extending obliquely in the axial direction of the first sleeve 41. In the present embodiment, there are three ribs 411. The first cutter 42 is provided with rib slots 421 that cooperate with the ribs 4111. The first cuter 42 is mounted downward to the first sleeve 41, and the first cutter 42 is connected to the first sleeve 41 in a way that permits its up and down movement. By means of the cooperation between the ribs 411 and the rib slots 421, on one hand, torque transmission from the first sleeve 41 to the first cutter 42 in the circumferential direction of the output shaft 31 can be achieved, and on the other hand, the up and down movement of the first cutter 42 on the first sleeve 41 in the axial direction of the output shaft 31 can be guided. In the case of food that needs to be crushed, such as juicing, the up and down movement of the first cutter 42 can improve crushing results.

In other embodiments, the first sleeve 41 can also be of a different structure. A different first sleeve 41 can cooperate with a different cutter 42. Therefore, by providing the first sleeve 41, multiple modes of connection are added, which further facilitates the mounting of different cutters.

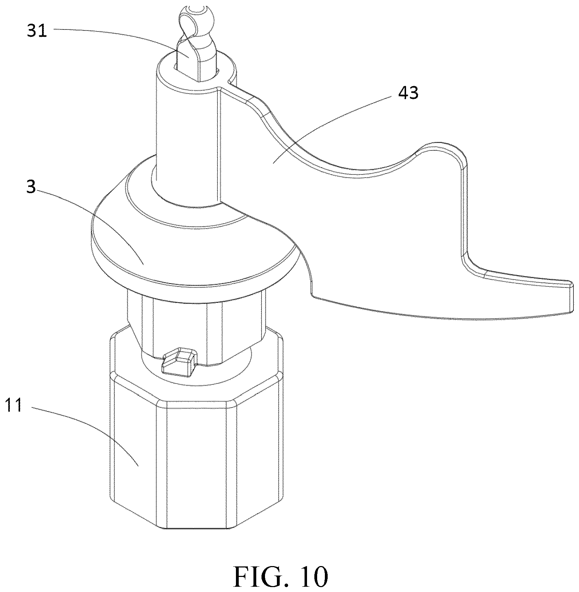

With reference to Fig. 10, in the present embodiment, the second cutter assembly comprises a second cutter 43 that can be sleeved to the output shaft 31. With the second cutter 43 directly arranged on the output shaft 31, the structure is simple. In other embodiments, the second cutter assembly can also comprise a second sleeve by means of which the second cutter 43 is connected to the output shaft 31.

Below, the process of assembling and using the food processor provided by an embodiment of the present invention is described with reference to Figs. 8 and 10. When the first cutter 42 is needed to process food, the first sleeve 41 is sleeved downward to the output shaft 31, and when the boss 312 and the groove 312 engage in a snap-fit manner, the first sleeve 41 is mounted to position; then, the rib slots 421 in the first cutter 42 are aligned with the ribs 411 on the first sleeve 411, and the first cutter 42 is sleeved to the outer side of the first sleeve 41; the assembled output shaft assembly 3 and the first cutter assembly 4 are placed on the host 1 together with the food processing cup 2, and an electric motor in the host 1 is connected to the output shaft assembly 3 via the clutch 11; to crush and process food in the food processing cup 2 by driving the first cutter 42 to rotate via the output shaft assembly 3, one need only turn on the electric motor in the host 1. When the second cutter 43 is needed to process food, the first cutter assembly 4 needs to be removed from the output shaft 31. Then, the second cutter 43 is sleeved downward to the output shaft 31; the assembled output shaft assembly 3 and the second cutter 43 are placed on the host 1 together with the food processing cup 2, and the electric motor in the host 1 is connected to the output shaft assembly 3 via the clutch 11; to process food in the food processing cup 2 by driving the second cutter 43 to rotate via the output shaft assembly 3, one need only turn on the electric motor in the host 1. The electric motor can be a variable speed motor, or a fixed speed motor that achieves speed variation by means of a gearbox, so as to output different rotation speeds based on different cutters. In the present embodiment, the nominal operational rotation speed of the first cutter 42 is larger than that of the second cutter 43, so as to adapt to different food processing functions. For example, the first cutter 42 is a cutter used for juicing, has a high rotation speed when in operation, and can move up and down to a certain extent; the second cutter 43 is a cutter used for kneading dough, has a low rotation speed when in operation, and cannot move up and down. It can be seen that the food processor provided by an embodiment of the present invention can well adapt to different food processing functions by changing to different cutter assemblies.

From the above description of specific embodiments, it can be seen that in a cutter assembly provided by an embodiment of the present invention, by a removable connection between the output shaft 31 and a cutter, the change to different cutters is facilitated; and further, by providing the first sleeve 41, multiple modes of connection are added, which further adapts to the mounting of different cutters. A food processor provided by an embodiment of the present invention has the above-described cutter assembly, and therefore has multiple different food processing functions and can improve the food processing results of these functions.

What have been described above are merely preferred embodiments of the present invention, and do not limit the present invention in any form. Although the present invention has been disclosed as above with preferred embodiments, they are not intended to limit the present invention. Any skilled person familiar with the art, without departing from the scope of the technical solutions of the present invention, can use the technical contents disclosed above to make some changes or modifications to make them into equivalent embodiments with equivalent effects. However, any simple modification, equivalent change and modification of the above embodiments made according to the technical essence of the invention without departing from the content of the technical solutions of the present invention shall still fall within the scope of the technical solutions of the present invention.

## Claims

1. A cutter assembly, **characterized in that** it comprises an output shaft (31), a first cutter assembly (4) and a second cutter assembly that are alternatively and removably connected to the output shaft (31).

2. The cutter assembly according to claim 1, wherein the first cutter assembly (4) comprises a first sleeve (41) sleeved on the output shaft (31), and a first cutter (42) connected to the first sleeve (41).

3. The cutter assembly according to claim 2, wherein the output shaft (31) is provided with a first snap-on member, and the first sleeve (41) is provided with a second snap-on member, the first sleeve (41) and the output shaft (31) being connected to each other through the snap fit of the first snap-on member with the second snap-on member.

4. The cutter assembly according to claim 3, wherein the first snap-on member is a boss (312), and the second snap-on member is a groove (412); or the first snap-on member is a groove (412), and the second snap-on member is a boss (312).

5. The cutter assembly according to claim 2, wherein the output shaft (31) comprises a body part (311), and the first sleeve (41) is provided therein with a body part groove cooperating with the body part (311), the output shaft (31) driving the first sleeve (41) to rotate through the cooperation of the body part (311) with the body part groove.

6. The cutter assembly according to claim 2, wherein the first sleeve (41) is provided with a rib (411) at its outer side, and the first cutter (42) is provided with a rib slot (421) that fits with the rib (411).

7. The cutter assembly according to claim 6, wherein the first cutter (42) is connected to the first sleeve (41) in such a way that it can move up and down on the first sleeve (41).

8. The cutter assembly according to any one of claims 1 to 7, wherein the second cutter assembly comprises a second cutter (43) sleeved on the output shaft (31).

9. A food processor, **characterized in that** it comprises a host (1), a food processing cup (2) placed on the host (1), and a cutter assembly according to any one of claims 1 to 8, wherein the cutter assembly protrudes into the food processing cup (2), and an electric motor that drives the cutter assembly to rotate is provided in the host (1).

10. The food processor according to claim 9, wherein the electric motor is connected to or disconnected from the output shaft (31) through a clutch (11).
